# DEMANDE DE BREVET EUROPEEN

(11) **EP 4 219 630 A1**
(43) Date de publication de la demande: **02.08.2023**
(21) Numéro de dépôt: 22305102.0
(22) Date de dépôt: 28.01.2022
(51) Int. Cl.: C08L 91/00, C08L 97/00, C08L 75/04, C08G 71/04

(54) **PROCEDE DE PREPARATION DE MATERIAUX COMPOSITES A PARTIR DE GRANULES DE LIEGE ET PROCEDE DE FABRICATION D ARTICLES MOULES**

(30) Priorité: 26.01.2022 FR 2200680
(71) Demandeur: DIAM BOUCHAGE, 66400 Ceret (FR)
(72) Inventeur: ZETTWOOG, Rébecca, 66000 PERPIGNAN (FR); COULON, Luc, 66110 AMÉLIE-LES BAINS - PALALDA (FR); LOISEL, Christophe, 66180 VILLENEUVE DE LA RAHO (FR)
(74) Mandataire: Casalonga

(57) **Abrégé**

L'invention concerne un procédé de préparation de matériaux composites à partir de granulés de liège et de polyols solides, et un procédé de fabrication d'articles moulés utilisant les matériaux composites.

## Description

La présente invention est relative à un procédé de préparation de matériaux composites à partir de granulés de liège et à un procédé de fabrication d'articles moulés les comprenant.

Les articles moulés peuvent être, par exemple, des obturateurs ou bouchons qui servent à boucher des bouteilles de vin, qu'il soit tranquille ou effervescent, des bouteilles de spiritueux ou d'autres boissons pétillantes ou pas.

L'invention concerne aussi les matériaux composites et les articles moulés, tels que des obturateurs, obtenus à partir desdits procédés.

Le liège est un matériau naturel, imperméable et léger, qui provient de l'écorce de certaines espèces de chênes, telles que les chênes-lièges, qui se trouvent typiquement dans les pays du pourtour méditerranéen, en Europe et en Afrique du Nord.

Le liège trouve notamment son utilisation dans la fabrication de bouchons, qui servent à boucher des récipients tels que des bouteilles contenant des liquides destinés à l'alimentation, en particulier, du vin tranquille ou effervescent, de spiritueux ou d'autres boissons.

Le liège est un matériau élastique, résilient, comprimable et imperméable aux liquides, ayant en même temps une perméabilité aux gaz suffisante pour permettre un échange nécessaire à la maturation du produit en bouteille, et présentant un fort coefficient de friction.

De nombreuses recherches ont été menées pour tenter de mettre au point des compositions dont les propriétés se rapprochent de celles du liège naturel et qui permettent de le remplacer notamment pour la fabrication de bouchons.

Ces recherches ont conduit à fabriquer des bouchons en liège aggloméré à partir de granulés de liège et d'un liant ou colle qui assure la cohésion du bouchon. Etant en contact direct avec des produits alimentaires, ils doivent également être aptes au contact alimentaire et garantir une neutralité sensorielle vis-à-vis des boissons qu'ils conservent.

Le liant ou colle peut être mono-composant ou bi-composant. Dans ce dernier cas, il résulte du mélange préalable de deux composants organiques liquides à température ambiante, capables de polymériser, et le mélange liquide est ensuite ajouté aux granulés de liège.

La fabrication de tels bouchons en liège aggloméré à partir d'un liant, notamment bi-composant, présente l'inconvénient d'avoir une étape préalable de préparation du liant polymère à partir de deux composants, tels qu'un polyol et un isocyanate, qui sont généralement visqueux, et dont la vitesse de polymérisation peut être difficile à contrôler.

Par exemple, lorsqu'un isocyanate est mélangé avec un polyol liquide à une température allant de 20 à 50 °C, la polymérisation du liant peut commencer dès leur mise en contact l'un avec l'autre. Elle débute avant l'addition du liant au liège. Il faut donc utiliser rapidement le mélange du liège et du liant pour éviter notamment une accumulation d'amas polymérisés dans le malaxeur, ces derniers ne pouvant pas être utilisés ensuite dans l'étape de moulage des articles.

De plus, dans le cas de liants bi-composant biosourcés comprenant au moins un polyol issu d'huiles végétales, les contrôles qualités de ce polyol végétal doivent être impérativement très stricts en terme de pureté de sa composition, comme par exemple sa teneur en composés insaturés volatiles ou autres composés d'oxydation, si on veut absolument garantir une parfaite neutralité sensorielle des produits finis.

Il existe donc un besoin de développer un nouveau procédé permettant de surmonter les inconvénients présentés ci-dessus.

L'invention vise à satisfaire ce besoin en proposant un procédé de préparation de matériaux composites à partir de granulés de liège et d'un polyol solide à température ambiante (18-25 °C).

L'invention a ainsi pour objet un procédé de préparation de matériaux composites comprenant les étapes suivantes :
(a) le chauffage d'un ou plusieurs polyols solides à température ambiante, à une température supérieure à la température de fusion dudit polyol ou du mélange desdits polyols ; et
(b) la pulvérisation du polyol fondu ou du mélange de polyols fondu obtenus à l'étape (a), sur des granulés de liège éventuellement traités, lesdits granulés de liège étant à une température inférieure à la température de fusion du polyol ou dudit mélange de polyols. De préférence, les granulés de liège après d'éventuel(s) traitement(s) sont à température ambiante (18-25 °C).

Par « polyol solide », on entend un polyol qui n'est pas liquide à température ambiante (18-25 °C) et sous pression atmosphérique (1,013 × 10⁵ Pa).

La température de fusion mentionnée ci-dessus peut être mesurée sur une plaque chauffante telle qu'un banc Kofler, ou par une méthode de tubes capillaires.

La température de fusion du polyol solide est notamment supérieure ou égale à 55 °C. Préférentiellement, elle va de 55 à 95 °C.

Ce procédé conduit à des matériaux composites qui ne sont pas réactifs, et qui sont stables au stockage et d'un usage facile. En particulier, ils peuvent être facilement transportables avant d'être utilisés, par exemple dans la fabrication d'articles moulés tels que des bouchons.

Par « non-réactif », on entend des matériaux composites qui ne réagissent pas entre eux.

Par « stable au stockage », on entend au sens de la présente invention que l'aspect visuel et la nature chimique des enrobages (ou revêtements) n'évoluent pas au cours du temps dans des conditions standard de stockage, par exemple pendant le mois ou les deux mois qui suivent leur fabrication, à 4 °C et à température ambiante (18-25 °C).

L'invention concerne également les matériaux composites susceptibles d'être obtenus pas le procédé ci-dessus. En particulier, les matériaux composites comprennent des granulés de liège éventuellement traités, revêtus d'une couche de polyol ou de mélange de polyols.

L'invention a encore pour objet un procédé de fabrication d'articles moulés comprenant le procédé de préparation de matériaux composites et les étapes supplémentaires suivantes :
(c) le mélange d'un ou plusieurs isocyanates oligomères liquides avec des matériaux composites de l'invention, notamment obtenus à l'étape (b), à température ambiante pendant 5 à 20 minutes, de préférence 7 à 15 minutes, mieux pendant 10 à 14 minutes;
(d) l'introduction du mélange de l'étape (c) dans des moules ; et
(e) le chauffage à une température allant de 60 à 150 °C préférentiellement de 110 à 140 °C sous pression atmosphérique pendant une durée allant de 10 à 90 minutes préférentiellement de 20 à 50 minutes.

Ce nouveau procédé permet de produire des articles moulés comme des obturateurs ou bouchons d'une manière plus simple et plus économique.

En effet, les systèmes de mélange et de dosage des liants à deux composants de l'art antérieur ne sont plus nécessaires.

En outre, aucune polymérisation entre le polyol et l'isocyanate n'est observée avant l'étape (e). En d'autres termes, la polymérisation du liant ne démarre que dans les moules à l'étape (e). On a ainsi une polymérisation retardée par rapport à ce qui est connu dans ce domaine.

Un autre objet de l'invention est l'article moulé, comme, par exemple, des obturateurs ou bouchons, susceptible d'être obtenu avec le procédé selon l'invention.

Les bouchons susceptibles d'être obtenus à partir du procédé selon l'invention présentent tout au moins les mêmes propriétés organoleptiques et mécaniques que ceux actuellement sur le marché.

Par « propriétés organoleptiques », on entend un bouchon qui ne donne pas, par exemple, de goût de bouchon aux boissons comme le vin.

D'autres caractéristiques et avantages de l'invention apparaitront plus clairement à la lecture de la description, et de l'exemple qui suit.

Dans ce qui va suivre, et à moins d'une autre indication, les bornes d'un domaine de valeurs sont comprises dans ce domaine, notamment dans les expressions « *compris entre* » et « *allant de* ... *à* ... ».

Par ailleurs, l'expression « *au moins un* » utilisée dans la présente description est équivalente à l'expression « *un ou plusieurs* »*.*

Tous les modes de réalisation préférés ci-dessous pour chaque caractéristique peuvent être combinés.

Selon l'invention, le procédé de préparation des matériaux composites comprend les étapes (a) et (b) définies dans la présente description. Il s'effectue à partir de granulés de liège éventuellement traités et de polyol(s) solide(s) à température ambiante.

Les granulés de liège pouvant être utilisés dans l'invention présentent de préférence une granulométrie de 0,01 mm jusqu'à 8 mm, plus préférentiellement de 0,25 mm à 3 mm.

La granulométrie peut être mesurée, par exemple, par la méthode des tamis, à température ambiante (18-25 °C).

Les granulés de liège sont éventuellement traités avant d'être utilisés dans l'étape (b) du procédé de préparation des matériaux composites. Un premier traitement permet de préférence, d'éliminer majoritairement ou totalement le 2,4,6-trichloroanisole.

Par « majoritairement », on entend une quantité de 2,4,6-trichloroanisole non détectable, à savoir inférieure à 0,3 ng/1.

Dans un mode de réalisation, les granulés de liège sont préalablement soumis à un traitement au dioxyde de carbone (CO₂) supercritique ou avec de la vapeur d'eau, et/ou à un enrobage avec au moins une cire comme cela est décrit ci-dessous. Plus particulièrement, ils sont traités préalablement au CO₂ supercritique puis enrobés avec une ou plusieurs cires.

De préférence, les granulés de liège utilisés dans l'étape (b) sont soumis au préalable à un traitement au dioxyde de carbone (CO₂) supercritique dans une étape (i). Cette étape (i) se fait notamment à une température de 10 à 120 °C, de préférence de 40 à 80 °C, et sous une pression de 1 à 60 MPa (10 à 600 bars), de préférence de 10 à 30 MPa (100 à 300 bars). Un tel procédé de traitement est notamment décrit dans le brevet EP 1 216 123. Il permet d'éliminer en particulier le 2,4,6-trichloroanisole responsable du phénomène appelé « goût de bouchon ».

Les granulés de liège, ayant éventuellement subi un traitement au dioxyde de carbone à l'état supercritique, peuvent être soumis à un enrobage avec une ou plusieurs cires avant d'être utilisés dans l'étape (b) du procédé de préparation de matériaux composites.

La ou les cires pouvant être utilisée(s) sont notamment l'ozokérite, les cires végétales comme la cire de candelilla, la cire de carnauba, la cire d'Alfa, la cire d'olivier, la cire de riz, et la cire de jojoba hydrogénée, les cires animales comme les cires d'abeilles, ou les cires d'abeilles modifiées (cerabellina), la stéarine et leurs mélanges.

Plus particulièrement, la ou les cires est ou sont choisies parmi la cire de candelilla, la cire de carnauba, la cire d'abeille et leurs mélanges. Mieux encore, la cire est la cire d'abeille.

De préférence, la ou les cires sont utilisées en une quantité totale allant de 1 à 20 g., plus préférentiellement de 4 à 12 g. de matière sèche pour 100 g. de granulés de liège.

L'enrobage peut se faire à partir d'une émulsion contenant la ou les cires et un solvant, comme cela est décrit, par exemple, dans la demande de brevet européen No. 3 318 608.

Le solvant utilisé pour la mise en émulsion de la ou des cire(s) est notamment choisi parmi l'eau, les alcools en C₁₋₄, tels que le méthanol ou l'éthanol, et leurs mélanges, et plus particulièrement parmi l'eau et l'éthanol, encore plus préférentiellement l'eau.

De préférence, le(s) solvant(s) est(sont) contenu(s) en une quantité allant de 40 à 90 % en poids, mieux de 60 à 80 % en poids par rapport au poids total de l'émulsion.

Les granulés de liège enrobés peuvent être préparés par :
(ii) mélange des granulés de liège avec la ou les cires en émulsion dans un solvant, dans un malaxeur, à température ambiante (18-25 °C), sous pression atmosphérique (1,013 × 10⁵ Pa) ;
(iii) séchage du mélange obtenu à l'étape (ii) à une température inférieure à 160 °C, de préférence allant de la température ambiante (18-25 °C) à 100 °C, mieux de 50 à 80 °C, sous pression atmosphérique, pendant une durée allant de 5 minutes à 2 heures, de préférence de 10 minutes à 90 minutes, mieux encore de 15 minutes à 60 minutes.

L'étape de séchage (iii) peut être réalisée dans une étuve ou dans un séchoir à grain. L'objectif de cette étape (iii) est d'obtenir une humidité du granulé inférieure à 6% en poids par rapport au poids total de granulés de liège.

Dans un autre mode de réalisation, l'enrobage comprend les étapes suivantes :
(ii') le chauffage d'une ou plusieurs cires, à une température supérieure à la température de fusion de la cire ou du mélange de cires,
(iii') la pulvérisation de la cire fondue ou du mélange de cires fondues obtenus à l'étape (ii'), sur des granulés de liège éventuellement traités, de préférence ayant subi un traitement au CO₂ supercritique ou à la vapeur d'eau, les granulés de liège étant à une température inférieure à la température de fusion de la cire ou dudit mélange de cires.

La température de fusion de la cire peut être mesurée avec les méthodes mentionnées ci-dessus pour les polyols.

L'étape (ii') permet de faire passer la cire ou le mélange de cires de l'état solide à l'état liquide. La température de chauffage de l'étape (ii') va de préférence de 70 °C à 130 °C, mieux de 75 °C à 110 °C, mieux encore de 80°C à 100°C.

Dans cette étape, la cire se trouve dans une cuve chauffée et connectée à une pompe d'injection.

Dans l'étape (iii'), les granulés de liège sont de préférence à température ambiante. La pompe d'injection pulvérise le produit fondu, via des buses ou des canules d'injection par diffusion à air comprimé chauffé, sur les granulés de liège qui sont eux-mêmes dans un malaxeur à température ambiante. Ce dernier est équipé d'un mélangeur, par exemple à double ruban, et de disperseurs, par exemple à ailettes. Ces équipements permettent une bonne répartition du produit fondu sur les granulés de liège.

Les granulés de liège éventuellement traités, sont utilisés dans le procédé de préparation des matériaux composites de l'invention. Ledit procédé comprend une étape (a) de chauffage d'un ou plusieurs polyols solides à température ambiante, à une température supérieure à la température de fusion dudit polyol ou du mélange de polyols solides.

Les polyols solides utilisables dans l'invention présentent notamment une température de fusion supérieure ou égale à 55 °C. Préférentiellement elle va de 55 à 95 °C.

Les polyols solides comprennent de préférence au moins 2 groupements OH préférentiellement 3.

Les polyols solides peuvent être choisis parmi les huiles végétales hydrogénées et/ou fonctionnalisées, plus particulièrement hydrogénées et/ou hydroxylées, telles que l'huile de ricin hydrogénée, l'huile de jojoba hydroxylée et hydrogénée, l'huile de lin hydrogénée et hydroxylée, l'huile de soja hydrogénée et hydroxylée, l'huile de vernonia hydrogénée et hydroxylée, l'huile de pépin de raisin hydrogénée et hydroxylée, l'huile de colza hydrogénée et hydroxylée, l'huile de tournesol hydrogénée et hydroxylée, l'huile de coco hydrogénée et hydroxylée, l'huile d'olive hydrogénée et hydroxylée, l'huile de noix hydrogénée et hydroxylée, l'huile de chanvre hydrogénée et hydroxylée, l'huile de carmeline hydrogénée et hydroxylée, l'huile de sésame hydrogénée et hydroxylée, l'huile d'arachide hydrogénée et hydroxylée, l'huile de carthame hydrogénée et hydroxylée, l'huile de maïs hydrogénée et hydroxylée, l'huile de germe de blé hydrogénée et hydroxylée, l'huile de palme hydrogénée et hydroxylée ; des polyols issus de la biomasse végétale tels que des polypropanediols à haut poids moléculaire, notamment supérieur ou égal à 1500 g/mol, par exemple allant de 1500 à 4000 g/mol, mieux de 2000 à 3000 g/mol ; et leurs mélanges.

Par « huile végétale hydroxylée », on entend une huile végétale portant au moins un groupe hydroxyle.

Préférentiellement, le polyol solide est choisi parmi l'huile de ricin hydrogénée, l'huile de jojoba hydroxylée et hydrogénée, l'huile de lin hydrogénée et hydroxylée, l'huile de soja hydrogénée et hydroxylée, l'huile de vernonia hydrogénée et hydroxylée, l'huile de colza hydrogénée et hydroxylée, l'huile de tournesol hydrogénée et hydroxylée, l'huile de coco hydrogénée et hydroxylée, et leurs mélanges. Mieux encore, il est l'huile de ricin hydrogénée.

L'étape (a) permet de faire passer le(s) polyol(s) de l'état solide à l'état liquide. La température de chauffage de l'étape (a) va de préférence de 90 °C à 130 °C, mieux de 100 °C à 120 °C, mieux encore de 100°C à 110°C.

Dans cette étape, le(s) polyol(s) solide(s) sont placés dans une cuve différente de celle qui a contenu la ou les cires de l'éventuelle étape (ii'), puis chauffé(s). Il(s) peu(ven)t être pulvérisé(s) avec la même technique que celle exposée ci-dessus pour la cire, sur les granulés de liège présents dans le malaxeur où règne la température ambiante.

De préférence, le(s) polyols solide(s) sont utilisés en une quantité totale allant de 20 à 40 g., plus préférentiellement de 25 à 35 g. de matière pour 100 g. de granulés de liège.

Après la pulvérisation (b) du polyol fondu ou d'un de leurs mélanges, les granulés de liège présentent un seul enrobage ou deux enrobages. En d'autres termes, ils sont recouverts d'une seule couche de polyol(s) ou d'une première couche de cire(s) et d'une seconde couche de polyol(s) recouvrant la première couche.

L'invention concerne également les matériaux composites comprenant des granulés de liège recouverts d'au moins une couche externe de polyol(s), et éventuellement d'au moins une couche de cire(s) en-dessous de la couche externe de polyol(s). Les polyols et les cires sont de préférence ceux décrits ci-dessus.

Le matériau composite susceptible d'être obtenu avec le procédé de préparation tel que décrit ci-dessus, est stable au stockage, notamment à température ambiante sous pression atmosphérique. Aucune réaction chimique ne se produit lorsque ces matériaux composites sont stockés et transportés pour être utilisés ultérieurement, par exemple, dans un procédé de fabrication d'articles moulés.

Un objet de l'invention est également l'utilisation des matériaux composites de l'invention dans la fabrication d'articles moulés tels que des obturateurs ou bouchons. Ils sont notamment utilisés en association avec un ou plusieurs isocyanates oligomères, ces derniers pouvant être ceux décrits ci-après.

L'invention concerne aussi un procédé de fabrication d'articles moulés comprenant le procédé de préparation des matériaux composites tel que décrit ci-dessus. Le procédé de fabrication d'articles moulés comprend les étapes supplémentaires suivantes :
(c) le mélange d'un ou plusieurs isocyanates oligomères liquides avec des matériaux composites susceptibles d'être obtenus par le procédé de préparation de l'invention, à température ambiante pendant 5 à 20 minutes, de préférence 7 à 15 minutes, mieux 10 à 14 minutes ;
(d) l'introduction du mélange de l'étape (c) dans des moules ; et
(e) le chauffage à une température allant de 60 à 150 °C préférentiellement de 110 à 140 °C sous pression atmosphérique pendant une durée allant de 10 à 90 minutes préférentiellement de 20 à 50 minutes.

Dans l'étape (c) du procédé selon l'invention, un ou plusieurs isocyanates oligomères liquides sont ajoutés et mélangés dans un malaxeur à des matériaux composites susceptibles d'être obtenus par le procédé de préparation de l'invention, à température ambiante pendant 5 à 20 minutes, de préférence 7 à 15 minutes.

Par oligomère d'isocyanates, on entend une chaîne constituée de deux à sept motifs isocyanates monomères, préférentiellement deux à trois motifs isocyanates monomères.

Les isocyanates oligomères pouvant être utilisés dans l'invention sont de préférence aliphatiques tels que, par exemple, les oligomères de diisocyanate d'hexaméthylène, de diisocyanate de pentaméthylène, de diisocyanate d'isophorone, ou de méthylène bis(4-cyclohexylisocyanate), de diisocyanate de lysine ou de diméryl diisocyanate. Plus particulièrement, ils sont choisis parmi les oligomères de diisocyanate d'hexaméthylène, les oligomères de diisocyanate de pentaméthylène, et les oligomères de diisocyanate d'isophorone.

En particulier, l'isocyanate ou les isocyanates est ou sont introduits en une quantité telle que le rapport stœchiométrique fonction isocyanate:fonction polyol soit compris entre 0,8:1 et 1,9:1, mieux de 1,1 :1 à 1,6:1.

Le mélange obtenu à l'étape (c) est ensuite introduit dans des moules. Les moules sont chauffés à une température allant de 60 à 150 °C, préférentiellement de 110 à 140 °C, sous pression atmosphérique pendant une durée allant de 10 à 90 minutes préférentiellement de 20 à 50 minutes.

Dans un mode de réalisation, le chauffage de l'étape (e) peut se faire en deux sous-étapes.

Les articles moulés sont ainsi obtenus à partir de granulés de liège, de cire(s) optionnelles, de polyol(s) solide(s) et d'isocyanate(s) oligomère(s).

Les articles moulés peuvent être des obturateurs ou bouchons de bouteilles de vin tranquille ou effervescent, ou de spiritueux, ou de boissons non-alcoolisées, pétillantes ou non.

Les bouchons ainsi obtenus sont bruts et on peut les soumettre à différentes étapes afin d'obtenir des bouchons prêts à la vente, telles qu'un ajout d'une ou deux rondelles en liège naturel à au moins une extrémité, un usinage pour obtenir les dimensions recherchées, un marquage, et/ou une application d'un traitement de surface.

L'ajout d'au moins une rondelle à au moins une extrémité conduit à la fabrication d'un bouchon technique tel que le « 1+1 », le « 2+2 », le « 0+2 » et le « 0+1 ».

Par « 1+1 », on entend un bouchon dont le corps est constitué de granulés de liège aggloméré avec un liant, tandis que les deux extrémités sont composées chacune d'une rondelle en liège naturel, lesdites rondelles étant obtenues par tubage d'un morceau de liège dont l'épaisseur correspond à celle des rondelles. Le tubage consiste à prélever un morceau de liège au moyen d'un emporte-pièce.

Le bouchon « 2+2 » est constitué d'une partie agglomérée et avec 2 rondelles aux extrémités, tandis que les bouchons « 0+2 » pour le champagne ou les bouchons « 0+1 » pour les effervescents ne comprennent pas de rondelle à une extrémité et 2 ou 1 rondelle(s) à l'autre extrémité, respectivement.

Selon l'invention, le procédé de fabrication d'articles moulés, tels que des obturateurs ou des bouchons, comprend de préférence les étapes mises en œuvre dans l'ordre suivant :
- (a) à (e), ou
- (i) et (a) à (e), ou
- (i), (ii), (iii) et (a) à (e), ou
- (i), (ii'), (iii') et (a) à (e),
telles que définies ci-dessus,
mieux (i) et (a) à (e), ou (i), (ii), (iii) et (a) à (e), ou (i), (ii'), (iii') et (a) à (e), et mieux encore (i), (ii'), (iii') et (a) à (e).

Un autre objet de l'invention est l'article moulé tel qu'un obturateur ou bouchon susceptible d'être obtenu avec le procédé de fabrication selon l'invention.

Les obturateurs ou bouchons selon l'invention sont ainsi fabriqués de préférence à partir de matières naturelles ou biosourcées.

Par «biosourcé », on entend au sens de la présente invention un composé issu de la biomasse ayant subi ou non un traitement chimique, et n'étant pas classé CMR, classes 1A, 1B et 2. A titre d'exemples de biomasse, on peut notamment citer les extraits de végétaux, d'arbres, de vigne, de fruits, de légumes ou d'algues.

Ils présentent des propriétés physiques au moins équivalentes, à celles d'un bouchon en liège naturel et à celles des bouchons contenant au moins une partie de liège aggloméré à base de liant de l'art antérieur. En outre, l'utilisation d'un polyol solide tel que décrit ci-dessus permet une simplification du procédé de fabrication des obturateurs et une meilleure maîtrise de l'étape de collage des liants.

Parmi les propriétés physiques, on peut notamment citer les propriétés d'imbibition, de force de compression, de retour élastique (ou force de retour) et d'extraction du bouchon du col de la bouteille.

Pour vérifier que les nouveaux bouchons sont suffisamment étanches aux liquides, les tests d'imbibition suivants peuvent être utilisés : on introduit des bouchons dans de l'eau chauffée à 50°C et on les laisse immergés pendant 3 jours, ou on introduit des bouchons dans de l'eau chauffée à 90°C et on les laisse immergés pendant 15 min. La valeur d'imbibition représente la différence de poids du bouchon avant et après immersion dans l'eau chauffée. Elle est exprimée en % en poids par rapport au poids total du bouchon avant immersion. La valeur doit être inférieure à 20 % pour le test à 50°C.

Les propriétés mécaniques sont caractérisées par la force de compression pour le comprimer ou par la force que le bouchon renvoie sur le goulot de la bouteille communément appelé le retour élastique.

A titre indicatif, les bouchons de diamètre compris entre 26 et 31 mm sont caractérisés par la mesure de pression de compression. Cette mesure se fait en comprimant un bouchon à l'aide d'un piston qui se déplace à la vitesse de 10 mm/min, à un diamètre compris entre 15 et 16 mm. La valeur de compression est ramenée à la surface cylindrique du bouchon. Celle-ci doit être comprise entre 15 et 60 N/cm² et préférentiellement entre 25 et 60 N/cm² selon les diamètres des bouchons.

A titre indicatif, les bouchons de diamètre compris entre 20 et 25 mm sont caractérisés par la mesure de la force de retour exercée par le bouchon après que le bouchon ait été comprimé à un diamètre de 15 à 16 mm, puis revenu à un diamètre de 18 à 21 mm et été maintenu pendant 3 minutes. La force obtenue est ramenée à la surface cylindrique du bouchon pour obtenir le retour élastique. Celle -ci doit être comprise pour les bouchons vin tranquille (diamètre de l'ordre de 24 mm) entre 0,8 et 5 N/cm², mieux allant de 1,5 à 4,5 N/cm² et préférentiellement 2 à 4 N/cm².

L'exemple suivant est donné à titre purement illustratif de la présente invention

### Exemple

On a introduit 40 kg de liège de granulométrie comprise entre 0,35 et 1,5 mm et traité au CO₂ supercritique dans un malaxeur agité avec un système de mélange à double rubans.

On a fait fondre 4 kg de cire d'abeille en pastille solide dans une première cuve chauffée à une température de 100 °C puis on l'a pulvérisée sur les granulés de liège agités dans le malaxeur, à l'aide de canule d'injection et de disperseurs.

On a fait fondre 12 kg d'huile de ricin hydrogénée en pastille solide dans une seconde cuve chauffée à une température de 110°C. On l'a ensuite pulvérisée sur les granulés de liège, préalablement enrobés avec la cire d'abeille, agités dans le malaxeur, à l'aide de canule d'injection et de disperseurs.

Au contact des granulés de liège qui se trouvent à température ambiante, la cire et l'huile pulvérisées se resolidifient et forment une enveloppe autour du granulé de liège.

Après ces deux étapes d'enrobage du liège avec la cire d'abeilles et l'huile de ricin hydrogénée, les grains sont enrobés par deux couches, la première couche étant la couche de cire d'abeille et la seconde couche étant la couche d'huile de ricin hydrogénée.

Les granulés doublement enrobés de cire d'abeille et d'huile de ricin hydrogénée sont ensuite introduits dans un second malaxeur et on a alors ajouté 10 kg de trimère de diisocyanate d'hexaméthylène dans ce second malaxeur équipé d'un système de mélange tel qu'un système à simple ou double rubans, à socs, à pales ou à bandes. On a mélangé le trimère avec les granulés de liège enrobés pendant 13 minutes à température ambiante.

Le mélange ainsi obtenu est réparti dans des moules. Les moules sont ensuite chauffés dans un premier four à 130°C pendant 30 min puis dans un second four à 110°C pendant 10 min.

Les bouchons sont alors démoulés.

Les propriétés des bouchons obtenus ont été analysés en termes d'imbibition, de retour élastique et de force d'extraction.

Le test d'imbibition exposé plus haut a été appliqué à 50 °C. Sur 3 lots de 18 bouchons testés, des teneurs en eau allant de 10 à 18 % ont été mesurées.

Le retour élastique, c'est-à-dire la force que renvoie le bouchon sur la paroi du col de la bouteille, a été mesuré de la manière décrite ci-dessus. Des forces de retour ont été déterminées pour 3 lots de 16 bouchons et elles vont de 3,2 à 3,7 N/cm².

Les forces d'extraction permettent de quantifier la force nécessaire pour extraire le bouchon du col de la bouteille. Elles ont été mesurées de la manière suivante : on introduit des bouchons à tester dans des cols de bouteille. Après 2 heures de repos dans les cols, les bouchons sont extraits à l'aide d'un tire-bouchon relié à un système de mesure de la force nécessaire à l'extraction du bouchon du col de la bouteille. La valeur de force d'extraction doit être compris entre 10 et 60 daN préférentiellement entre 20 et 50 daN selon les diamètres des bouchons.

Les valeurs obtenues pour 3 lots de 3 bouchons de l'exemple sont comprises entre 34 et 44 daN.

Les bouchons obtenus présentent donc des propriétés physiques tout au moins équivalentes à celles des bouchons obtenus avec un procédé n'utilisant pas de polyol solide dans leur fabrication, et de bonnes propriétés organoleptiques.

## Revendications

1. Procédé de préparation de matériaux composites comprenant les étapes suivantes :
(a) le chauffage d'un ou plusieurs polyols solides à température ambiante, à une température supérieure à la température de fusion dudit polyol ou du mélange desdits polyols ; et
(b) la pulvérisation du polyol fondu ou du mélange de polyols fondu obtenus à l'étape (a), sur des granulés de liège éventuellement traités, lesdits granulés de liège étant à une température inférieure à la température de fusion du polyol ou dudit mélange de polyols, de préférence à température ambiante.

2. Procédé selon la revendication 1, **caractérisé en ce que** la température de fusion du polyol est supérieure ou égale à 55 °C, préférentiellement elle va de 55 à 95 °C.

3. Procédé selon la revendication 1 ou 2, **caractérisé en ce que** le(s) polyol(s) solide(s) est ou sont choisi(s) parmi les huiles végétales hydrogénées et/ou fonctionnalisées, de préférence hydrogénées et/ou hydroxylées, telles que l'huile de ricin hydrogénée, l'huile de jojoba hydroxylée et hydrogénée, l'huile de lin hydrogénée et hydroxylée, l'huile de soja hydrogénée et hydroxylée, l'huile de vernonia hydrogénée et hydroxylée, l'huile de pépin de raisin hydrogénée et hydroxylée, l'huile de colza hydrogénée et hydroxylée, l'huile de tournesol hydrogénée et hydroxylée, l'huile de coco hydrogénée et hydroxylée, l'huile d'olive hydrogénée et hydroxylée, l'huile de noix hydrogénée et hydroxylée, l'huile de chanvre hydrogénée et hydroxylée, l'huile de carmeline hydrogénée et hydroxylée, l'huile de sésame hydrogénée et hydroxylée, l'huile d'arachide hydrogénée et hydroxylée, l'huile de carthame hydrogénée et hydroxylée, l'huile de maïs hydrogénée et hydroxylée, l'huile de germe de blé hydrogénée et hydroxylée, l'huile de palme hydrogénée et hydroxylée ; des polyols issus de la biomasse végétale tels que des polypropanediols à haut poids moléculaire, notamment supérieur ou égal à 1500 g/mol, par exemple allant de 1500 à 4000 g/mol, mieux de 2000 à 3000 g/mol ; et leurs mélanges.

4. Procédé selon l'une quelconque des revendications précédentes, **caractérisé en ce que** le polyol solide est l'huile de ricin hydrogénée.

5. Procédé selon l'une quelconque des revendications précédentes, **caractérisé en ce que** les granulés de liège présentent une granulométrie de 0,01 mm jusqu'à 8 mm, de préférence de 0,25 mm à 3 mm.

6. Procédé selon l'une quelconque des revendications précédentes, **caractérisé en ce que** les granulés de liège sont soumis à un traitement au dioxyde de carbone (CO₂) supercritique ou à la vapeur d'eau et/ou à un enrobage avec une ou plusieurs cires, de préférence à un traitement au CO₂ supercritique et à un enrobage avec une ou plusieurs cires.

7. Procédé selon l'une quelconque des revendications précédentes, **caractérisé en ce que** les granulés de liège sont soumis à un traitement au dioxyde de carbone (CO₂) supercritique à une température de 10 à 120 °C et sous une pression de 1 à 60 MPa (10 à 600 bars) avant d'être utilisés dans l'étape (b).

8. Procédé selon l'une quelconque des revendications précédentes, **caractérisé en ce que** les granulés de liège sont soumis à un enrobage avec une ou plusieurs cires, telles que la cire de candelilla, la cire de carnauba, la cire d'abeille ou un de leur mélanges.

9. Procédé selon l'une quelconque des revendications 6 à 8, **caractérisé en ce que** la ou les cires sont utilisées en une quantité totale allant de 1 à 20 g, plus préférentiellement de 5 à 12 g. de matière sèche pour 100 g. de granulés de liège.

10. Procédé selon l'une quelconque des revendication 6 à 9, **caractérisé en ce que** les granulés de liège enrobés sont préparés par :
(ii) mélange des granulés de liège avec la ou les cires en émulsion dans un solvant, dans un malaxeur, à température ambiante, sous pression atmosphérique ;
(iii) séchage du mélange obtenu à l'étape (ii) à une température inférieure à 160 °C, de préférence allant de la température ambiante à 100 °C, sous pression atmosphérique, pendant une durée allant de 5 minutes à 2 heures, de préférence de 10 minutes à 90 minutes

11. Procédé selon l'une quelconque des revendication 6 à 9, **caractérisé en ce que** l'enrobage comprend les étapes suivantes :
(ii') le chauffage d'une ou plusieurs cires, à une température supérieure à la température de fusion de la cire ou du mélange de cires, et
(iii') la pulvérisation de la cire fondue ou du mélange de cires fondu obtenu à l'étape (ii'), sur des granulés de liège éventuellement traités, lesdits granulés de liège étant à une température inférieure à la température de fusion de la cire ou dudit mélange de cires, de préférence à température ambiante.

12. Matériaux composites susceptibles d'être obtenus par le procédé selon l'une quelconque des revendications précédentes.

13. Matériaux composites comprenant des granulés de liège recouverts d'au moins une couche externe de polyol(s), et éventuellement d'au moins une couche de cire(s) en-dessous de la couche externe de polyol(s).

14. Matériaux composites selon la revendication 13, **caractérisés en ce que** le(s) polyol(s) solide(s) est ou sont choisi(s) parmi les huiles végétales hydrogénées et/ou fonctionnalisées, de préférence hydrogénées et/ou hydroxylées, telles que l'huile de ricin hydrogénée, l'huile de jojoba hydroxylée et hydrogénée, l'huile de lin hydrogénée et hydroxylée, l'huile de soja hydrogénée et hydroxylée, l'huile de vernonia hydrogénée et hydroxylée, l'huile de pépin de raisin hydrogénée et hydroxylée, l'huile de colza hydrogénée et hydroxylée, l'huile de tournesol hydrogénée et hydroxylée, l'huile de coco hydrogénée et hydroxylée, l'huile d'olive hydrogénée et hydroxylée, l'huile de noix hydrogénée et hydroxylée, l'huile de chanvre hydrogénée et hydroxylée, l'huile de carmeline hydrogénée et hydroxylée, l'huile de sésame hydrogénée et hydroxylée, l'huile d'arachide hydrogénée et hydroxylée, l'huile de carthame hydrogénée et hydroxylée, l'huile de maïs hydrogénée et hydroxylée, l'huile de germe de blé hydrogénée et hydroxylée, l'huile de palme hydrogénée et hydroxylée ; des polyols issus de la biomasse végétale tels que des polypropanediols à haut poids moléculaire, notamment supérieur ou égal à 1500 g/mol, par exemple allant de 1500 à 4000 g/mol, mieux de 2000 à 3000 g/mol ; et leurs mélanges.

15. Matériaux composites selon la revendication 13 ou 14, **caractérisés en ce que** la ou les cires est ou sont choisie(s) parmi la cire de candelilla, la cire de carnauba, la cire d'abeille ou un de leur mélanges.

16. Utilisation des matériaux composites selon l'une quelconque des revendications 12 à 15, dans la fabrication d'articles moulés tels que des bouchons ou obturateurs.

17. Procédé de fabrication d'un article moulé comprenant le procédé selon l'une quelconque des revendications 1 à 11, **caractérisé en ce qu'**il comprend les étapes supplémentaires suivantes :
(c) le mélange d'un ou plusieurs isocyanates oligomères liquides avec des matériaux composites à température ambiante pendant 5 à 20 minutes, de préférence de 7 à 15 minutes ;
(d) l'introduction du mélange de l'étape (c) dans des moules ; et
(e) le chauffage à une température allant de 60 à 150 °C préférentiellement de 110 à 140 °C sous pression atmosphérique pendant une durée allant de 10 à 90 minutes préférentiellement de 20 à 50 minutes.

18. Procédé de fabrication d'un article moulé selon la revendication 17, **caractérisé en ce que** le(s) isocyanate(s) oligomères sont choisis parmi les oligomères de diisocyanate d'hexaméthylène, de diisocyanate de pentaméthylène, de diisocyanate d'isophorone, ou de méthylène bis(4-cyclohexylisocyanate), de diisocyanate de lysine ou de diméryl diisocyanate, plus particulièrement parmi les oligomères de diisocyanate d'hexaméthylène, les oligomères de diisocyanate de pentaméthylène, et les oligomères de diisocyanate d'isophorone.

19. Procédé selon la revendication 17 ou 18, **caractérisé en ce que** le(s) isocyanate(s) sont introduits en une quantité telle que le rapport stœchiométrique fonction isocyanate:fonction polyol va de 0,8:1 à 1,9:1, mieux de 1,1 :1 à 1,6:1.

20. Procédé selon l'une quelconque des revendications 17 à 19, **caractérisé en ce que** l'article moulé est un obturateur destiné à boucher des bouteilles.

21. Article moulé susceptible d'être obtenu avec le procédé selon l'une quelconque des revendications 17 à 20, qui est de préférence un obturateur ou bouchon.
